(19) Europäisches Patentamt
European Patent Office
Office européen des brevets

(11) **EP 3 526 585 B1**

(12) **FASCICULE DE BREVET EUROPEEN**

(45) Date de publication et mention
de la délivrance du brevet:
**25.11.2020 Bulletin 2020/48**

(21) Numéro de dépôt: **17787512.7**

(22) Date de dépôt: **10.10.2017**

(51) Int Cl.:
*G01N 21/03* (2006.01)    *G02B 17/00* (2006.01)

(86) Numéro de dépôt international:
**PCT/FR2017/052768**

(87) Numéro de publication internationale:
**WO 2018/069624 (19.04.2018 Gazette 2018/16)**

(54) **CAVITE OPTIQUE PENDULAIRE A FORT REPLIEMENT**

HOCHFALTENDER PENDELARTIGER OPTISCHER RESONATOR

HIGHLY FOLDING PENDULAR OPTICAL CAVITY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.10.2016 FR 1659812**

(43) Date de publication de la demande:
**21.08.2019 Bulletin 2019/34**

(73) Titulaire: **Commissariat à l'Énergie Atomique
et aux Énergies Alternatives
75015 Paris (FR)**

(72) Inventeur: **BOUTAMI, Salim
38100 Grenoble (FR)**

(74) Mandataire: **Talbot, Alexandre
Cabinet Hecké
28 Cours Jean Jaurès
38000 Grenoble (FR)**

(56) Documents cités:
**WO-A1-2006/135212    GB-A- 2 316 172
US-A1- 2003 058 439**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique**

L'invention se rapporte au domaine technique des cavités optiques. L'invention trouve notamment son application dans les capteurs spectroscopiques. Un capteur spectroscopique comporte une cavité optique, une source lumineuse émettant un rayonnement lumineux, et un détecteur du rayonnement lumineux. La source lumineuse peut être par exemple une source thermique ou un laser à cascade quantique. On peut citer comme applications les capteurs de fluide, les capteurs de particules, les capteurs biologiques etc.

Plus précisément, on peut citer un capteur infrarouge non-dispersif (classiquement dénommé NDIR pour « *Non-Dispersive InfraRed* » en langue anglaise) pour détecter un fluide tel qu'un gaz. La source lumineuse infrarouge est préférentiellement une source thermique. Par « infrarouge », on entend une longueur d'onde comprise entre 0,78 $\mu$m et 12 $\mu$m. Le détecteur infrarouge peut être par exemple un bolomètre ou un pyromètre. L'application préférentiellement envisagée est la détection d'un gaz, par exemple le $CO_2$, de manière fiable en environnement industriel, la détection étant classiquement une détection de seuil. Une autre application possible est l'analyse d'un gaz, impliquant des mesures quantitatives précises, sélectives, et stables de manière à obtenir une analyse de composition, voire une détection individuelle de la charge en $CO_2$ de l'air respiré. Un tel capteur NDIR peut être intégré dans un système portatif tel qu'un téléphone portable, un ordinateur, un appareil photo etc. L'invention peut également trouver son application dans des systèmes fixes pour la domotique, l'analyse de la qualité de l'air intérieur et extérieur, les détecteurs industriels etc.

Le principe de fonctionnement d'un capteur NDIR consiste à mesurer, par le détecteur infrarouge, la baisse d'intensité lumineuse lorsque le gaz à détecter se trouve à l'intérieur de la cavité optique. En effet, le gaz à l'intérieur de la cavité optique absorbe la lumière infrarouge à une longueur d'onde spécifique (ou sur une bande spectrale spécifique) au gaz à détecter. Pour ce faire, lorsque la source lumineuse est une source thermique, le détecteur infrarouge est classiquement muni d'un filtre adapté pour filtrer ladite longueur d'onde (ou la bande spectrale) prédéterminée.

Par exemple, dans l'hypothèse d'une distribution uniforme des molécules gazeuses, la loi de Beer-Lambert donne une formule pour la transmittance T de la lumière à travers un gaz :

$$T = \exp\left(-\sigma N l\right)$$

où :

- $\sigma$ est la section efficace d'absorption d'une molécule de gaz,
- N est le nombre de molécules de gaz par unité de volume,
- l est la longueur d'interaction entre le gaz et la lumière.

A titre d'exemple, pour le $CO_2$, la longueur d'interaction l est préférentiellement comprise entre quelques mm et quelques dizaines de cm.

Un capteur NDIR compact, à bas coût et à faible consommation électrique est recherché. Comme une grande compacité est recherchée, du fait de la longueur d'interaction élevée (pouvant atteindre quelques dizaines de cm), il n'est pas possible d'utiliser une cavité optique à trajet direct entre la source lumineuse et le détecteur infrarouge, y compris en présence de lentilles. Par « cavité à trajet direct », on entend une cavité fonctionnant sans miroir(s) pouvant replier le faisceau lumineux.

**Etat de la technique antérieure**

Il est connu de replier une cavité optique au sens où au moins un miroir est agencé dans la cavité optique pour guider un rayonnement lumineux émis par une source lumineuse selon un trajet indirect issu de réflexion(s) successive(s) sur le ou les miroirs.

Une première cavité optique connue de l'état de la technique, comporte un miroir elliptique destiné à réfléchir un rayonnement lumineux émis par une source lumineuse. La source lumineuse est agencée à un foyer du miroir elliptique, et un détecteur est agencé à l'autre foyer du miroir elliptique. Ainsi, si l'on considère le modèle de l'optique géométrique, les rayons lumineux émis par la source lumineuse parcourent la cavité optique deux fois.

Une deuxième cavité optique connue de l'état de la technique, notamment du document FR 3016214 (ci-après D1), comporte :

- un miroir plan destiné à réfléchir un rayonnement lumineux émis par une source lumineuse ;
- un miroir sphérique agencé pour réfléchir le rayonnement lumineux sortant du miroir plan, et possédant un axe optique orthogonal au miroir plan.

La source lumineuse peut être agencée au point d'intersection entre le miroir sphérique et l'axe optique. Le détecteur peut être agencé au point d'intersection entre le miroir plan et l'axe optique. Si l'on considère le modèle de l'optique géométrique, le miroir plan et le miroir sphérique de D1 sont configurés de sorte que les rayons lumineux émis par la source lumineuse parcourent la cavité optique trois fois (§0019).

De telles cavités optiques de l'état de la technique ne sont pas entièrement satisfaisantes dans la mesure où le faisceau lumineux (i.e. l'ensemble des rayons lumineux) émis par la source lumineuse parcourt un nombre de trajets limité à l'intérieur de la cavité optique, entre la source lumineuse et le détecteur. Lorsque l'on souhaite une longueur d'interaction élevée, par exemple pour augmenter la sensibilité du capteur ou en raison de la nature du gaz à détecter, ce nombre de trajets limité implique d'augmenter les dimensions de la cavité optique, au détriment de la compacité recherchée. Une cavité optique compacte et à fort repliement, c'est-à-dire autorisant un nombre de trajets important du faisceau lumineux à l'intérieur de la cavité entre la source lumineuse et le détecteur, est donc recherchée. En d'autres termes, une cavité optique autorisant un ratio élevé entre le chemin optique du faisceau lumineux et la surface de la cavité optique est recherchée.

## Exposé de l'invention

L'invention vise à remédier en tout ou partie aux inconvénients précités. A cet effet, l'invention a pour objet une cavité optique, comportant :

- un premier miroir elliptique, possédant un premier axe focal, noté $A_1$, et destiné à réfléchir un rayonnement lumineux émis par une source lumineuse ;
- un deuxième miroir elliptique, possédant un deuxième axe focal, noté $A_2$ ;
- un troisième miroir elliptique, possédant un troisième axe focal, noté $A_3$, le rayonnement lumineux sortant du troisième miroir elliptique étant destiné à être reçu par un détecteur ;
- un premier réflecteur, agencé pour réfléchir le rayonnement lumineux sortant du premier miroir elliptique vers le deuxième miroir elliptique, et agencé pour réfléchir le rayonnement lumineux sortant du deuxième miroir elliptique vers le troisième miroir elliptique ;

les premier, deuxième et troisième miroirs elliptiques étant agencés de sorte que $A_1$, $A_2$ et $A_3$ possèdent un point d'intersection, noté F, correspondant à un foyer commun aux premier, deuxième et troisième miroirs elliptiques.

Ainsi, une telle configuration géométrique des trois miroirs elliptiques autorise un nombre élevé (relativement à l'état de la technique) de trajets du faisceau lumineux à l'intérieur de la cavité optique selon l'invention, entre la source lumineuse et le détecteur, tout en conservant une cavité optique compacte. En effet, les propriétés d'une ellipse conduisent à un aplatissement des rayons lumineux se propageant par les foyers. L'aplatissement peut se quantifier par l'ellipticité $\varepsilon$ de l'ellipse dont la formule est $\varepsilon = 1 - b/a$, où a est le demi-grand axe de l'ellipse, et b est le demi-petit axe de l'ellipse. Plus l'ellipse est aplatie, plus l'ellipticité est proche de 1. Les rayons lumineux peuvent ainsi parcourir la plus grande distance possible à l'intérieur de la cavité optique. Pour ce faire, la source lumineuse est destinée à être positionnée au foyer du premier miroir elliptique distinct de F et le détecteur est destiné à être positionné au foyer du troisième miroir elliptique distinct de F. La cavité optique selon l'invention est une cavité pendulaire au sens où les rayons lumineux réfléchis successivement par le deuxième miroir elliptique se déplacent entre une extrémité et l'extrémité opposée du deuxième miroir elliptique, tout en s'aplatissant.

## Définitions

Par « sortant », on entend que le rayonnement lumineux peut :

- sortir directement du miroir après réflexion(s) avec celui-ci, ou
- sortir du miroir après réflexion(s) avec celui-ci, puis interagir avec une entité présente sur le chemin optique, en sortie du miroir.

Par « axe focal », on entend l'axe passant par les foyers du miroir elliptique. Le grand axe de l'ellipse (l'ellipse étant définie par le miroir elliptique) s'étend suivant l'axe focal. Plus précisément, les foyers du miroir elliptique s'étendent dans un plan, défini par deux directions :

- une première direction correspondant à l'axe focal, et
- une seconde direction suivant l'épaisseur du miroir elliptique, ou encore suivant l'épaisseur de la cavité optique.

La cavité selon l'invention peut comporter une ou plusieurs des caractéristiques suivantes.

Selon une caractéristique de l'invention, $A_2$ et $A_3$ sont confondus.

Ainsi, un avantage procuré est la possibilité pour le troisième miroir elliptique de réfléchir les rayons lumineux rasants sortant du deuxième miroir elliptique vers le détecteur.

Selon une caractéristique de l'invention, la demi-droite $FA_3$, destinée à être orientée vers le détecteur, et la demi-droite $FA_1$, destinée à être orientée vers la source lumineuse, forment un angle, noté $\alpha$, compris entre 45° et 120°.

Ainsi, un double avantage est procuré :

- les rayons lumineux réfléchis par le deuxième miroir elliptique ne peuvent retourner vers le premier miroir elliptique et la source lumineuse, et
- les rayons lumineux rasants peuvent sortir du deuxième miroir elliptique après un nombre élevé de réflexions successives de manière à obtenir un fort repliement de la cavité optique.

Selon une caractéristique de l'invention, l'angle $\alpha$ est compris entre 45° et 90°, de préférence égal à 90°.

Ainsi, un avantage procuré par la plage [45°-90°] relativement à la plage [45°-120°] est d'obtenir une cavité optique plus compacte. En outre, un avantage procuré par l'angle $\alpha$ égal à 90° est de maximiser la distance parcourue par les rayons lumineux à l'intérieur de la cavité optique.

Selon une caractéristique de l'invention, la cavité selon l'invention comporte un deuxième réflecteur agencé pour réfléchir le rayonnement lumineux sortant du deuxième miroir elliptique vers le premier réflecteur ; le premier réflecteur étant agencé pour réfléchir le rayonnement lumineux sortant du deuxième réflecteur vers le troisième miroir elliptique.

Ainsi, un avantage procuré par le deuxième réflecteur est de se substituer à une partie du deuxième miroir elliptique. Ainsi, il est possible de supprimer ladite partie du deuxième miroir elliptique afin d'augmenter la compacité de la cavité optique sans modifier la sensibilité du capteur.

Selon une caractéristique de l'invention, le deuxième réflecteur est un miroir plan.

Ainsi, un avantage procuré est la simplicité de réalisation d'un tel réflecteur.

Selon une caractéristique de l'invention, le deuxième réflecteur s'étend dans le prolongement du premier miroir elliptique suivant une direction longitudinale parallèle à $A_1$, et présente une dimension, notée $d_2$, selon la direction longitudinale et à partir du deuxième axe focal vérifiant :

$$d_2 \geq \frac{b^2}{2a}$$

où :

- a est le demi-grand axe du deuxième miroir elliptique,
- b est le demi-petit axe du deuxième miroir elliptique.

Ainsi, un avantage procuré par une telle dimension $d_2$ est d'assurer la réception d'un maximum de rayons lumineux sortant du deuxième miroir elliptique, afin de les renvoyer vers le premier réflecteur. Lorsque le deuxième réflecteur s'étend dans le prolongement du premier miroir elliptique, la valeur $d_2 = \frac{b^2}{2a}$ permet au premier miroir elliptique de collecter un maximum de rayons lumineux issus de la source lumineuse, lorsque la source lumineuse n'est pas directive.

Selon une caractéristique de l'invention, le premier réflecteur est un miroir plan.

Ainsi, un avantage procuré est la simplicité de réalisation d'un tel réflecteur.

Selon une caractéristique de l'invention, le premier réflecteur s'étend suivant $A_2$, et présente une dimension, notée $d_1$, selon $A_2$ vérifiant :

$$d_1 \geq 2c$$

où c est la distance entre le centre du deuxième miroir elliptique et le foyer commun F.

Ainsi, un avantage procuré par une telle dimension $d_1$ est d'assurer la réception d'un maximum de rayons lumineux sortant du premier miroir elliptique, du deuxième miroir elliptique, et le cas échéant du deuxième réflecteur.

Selon une caractéristique de l'invention, le deuxième miroir elliptique possède une ellipticité $\varepsilon$ vérifiant $0<\varepsilon<0,25$.

Ainsi, un avantage procuré par un tel miroir elliptique est la possibilité d'améliorer le repliement de la cavité optique, autrement dit le nombre de trajets des rayons lumineux à l'intérieur de la cavité optique après des réflexions successives. Un tel miroir elliptique tend vers un comportement de miroir sphérique lorsque $\varepsilon$ tend vers 0. Cependant, les foyers du miroir elliptique ne sont pas confondus afin de conserver une cavité pendulaire au sens où les rayons lumineux réfléchis successivement par le deuxième miroir elliptique se déplacent entre une extrémité et l'extrémité opposée du deuxième miroir elliptique, tout en s'aplatissant.

Selon une caractéristique de l'invention, la cavité optique comporte deux extrémités réfléchissantes opposées, adaptées pour réfléchir le rayonnement lumineux, et agencées de part et d'autre des premier, deuxième et troisième miroirs elliptiques ainsi que du premier réflecteur de manière à former un guide d'onde.

De telles extrémités réfléchissantes forment un guide d'onde agencé pour guider le rayonnement lumineux suivant la direction de l'épaisseur de la cavité optique. Le demandeur a constaté qu'il est toujours possible de conjuguer la source lumineuse avec le détecteur dans le plan de la cavité optique, et ce malgré la présence additionnelle d'un tel guide d'onde agencé suivant une direction perpendiculaire au plan de la cavité. Ainsi, un avantage procuré par de telles extrémités réfléchissantes est :

- d'augmenter l'efficacité optique de la cavité optique relativement à l'état de la technique, ou
- de permettre de réduire l'épaisseur de la cavité optique (gain en compacité) relativement à l'état de la technique pour une même efficacité optique.

Or, une cavité optique de l'état de la technique permet d'obtenir un capteur compact dans le plan de la cavité optique, mais pas dans l'épaisseur de la cavité optique. En effet, l'épaisseur de la cavité optique est dictée par l'épaisseur de la source lumineuse. Une réduction de l'épaisseur de la cavité optique conduit à une réduction de la taille de la source lumineuse, et par là-même à une perte d'efficacité optique. Une possibilité de compensation serait d'augmenter la puissance de la source lumineuse, au détriment de la consommation électrique.

L'invention a également pour objet un capteur spectroscopique, comportant :

- une cavité optique conforme à l'invention ; le premier miroir elliptique présentant un foyer, noté $F_1$, distinct du foyer commun F ; le troisième miroir elliptique présentant un foyer, noté $F_3$, distinct du foyer commun F ;
- une source lumineuse, adaptée pour émettre un rayonnement lumineux, et agencée au foyer $F_1$ ;
- un détecteur, agencé au foyer $F_3$ pour recevoir le rayonnement lumineux sortant du troisième miroir elliptique.

**Brève description des dessins**

D'autres caractéristiques et avantages apparaîtront dans l'exposé détaillé de différents modes de réalisation de l'invention, l'exposé étant assorti d'exemples et de référence aux dessins joints.

Figure 1 est une vue schématique en coupe transversale d'un capteur spectroscopique comportant une cavité optique selon un premier mode de réalisation de l'invention. Les traits pointillés prolongeant les miroirs elliptiques sont des traits de construction illustrant une demi-ellipse. Les traits pointillés mixtes correspondent aux axes focaux des miroirs elliptiques.

Figure 2 est une vue schématique en coupe transversale d'un capteur comportant une cavité optique selon un deuxième mode de réalisation de l'invention.

Figure 3 est une vue analogue à la figure 2, sans le tracé des rayons lumineux, et illustrant les paramètres géométriques de la cavité optique.

Par « transversale », on entend une direction perpendiculaire à la direction (notée Z) suivant l'épaisseur de la cavité optique. Le plan de coupe est noté (X, Y) sur les figures et correspond au plan de la cavité optique.

**Exposé détaillé des modes de réalisation**

Les éléments identiques ou assurant la même fonction porteront les mêmes références pour les différents modes de réalisation, par souci de simplification.

Un objet de l'invention est une cavité optique 1 comportant :

- un premier miroir elliptique $M_1$, possédant un premier axe focal, noté $A_1$, et destiné à réfléchir un rayonnement lumineux 2 émis par une source lumineuse S ;
- un deuxième miroir elliptique $M_2$, possédant un deuxième axe focal, noté $A_2$ ;
- un troisième miroir elliptique $M_3$, possédant un troisième axe focal, noté $A_3$, le rayonnement lumineux 2 sortant du

troisième miroir elliptique M$_3$ étant destiné à être reçu par un détecteur D ;

- un premier réflecteur R$_1$, agencé pour réfléchir le rayonnement lumineux 2 sortant du premier miroir elliptique M$_1$ vers le deuxième miroir elliptique M$_2$, et agencé pour réfléchir le rayonnement lumineux 2 sortant du deuxième miroir elliptique M$_2$ vers le troisième miroir elliptique M$_3$ ;

les premier, deuxième et troisième miroirs elliptiques M$_1$, M$_2$, M$_3$ étant agencés de sorte que A$_1$, A$_2$ et A$_3$ possèdent un point d'intersection, noté F, correspondant à un foyer commun aux premier, deuxième et troisième miroirs elliptiques M$_1$, M$_2$, M$_3$.

## Miroirs elliptiques

Les foyers des premier, deuxième et troisième miroirs elliptiques M$_1$, M$_2$, M$_3$ s'étendent suivant l'épaisseur de la cavité optique 1 (direction Z). Chaque miroir elliptique M$_1$, M$_2$, M$_3$ possède un axe focal A$_1$, A$_2$, A$_3$ Les deux foyers d'un miroir elliptique M$_1$, M$_2$, M$_3$ s'étendent dans un plan, défini par deux directions :

- une première direction correspondant à l'axe focal du miroir elliptique correspondant, et
- une seconde direction Z suivant l'épaisseur du miroir elliptique correspondant, ou encore suivant l'épaisseur de la cavité optique 1.

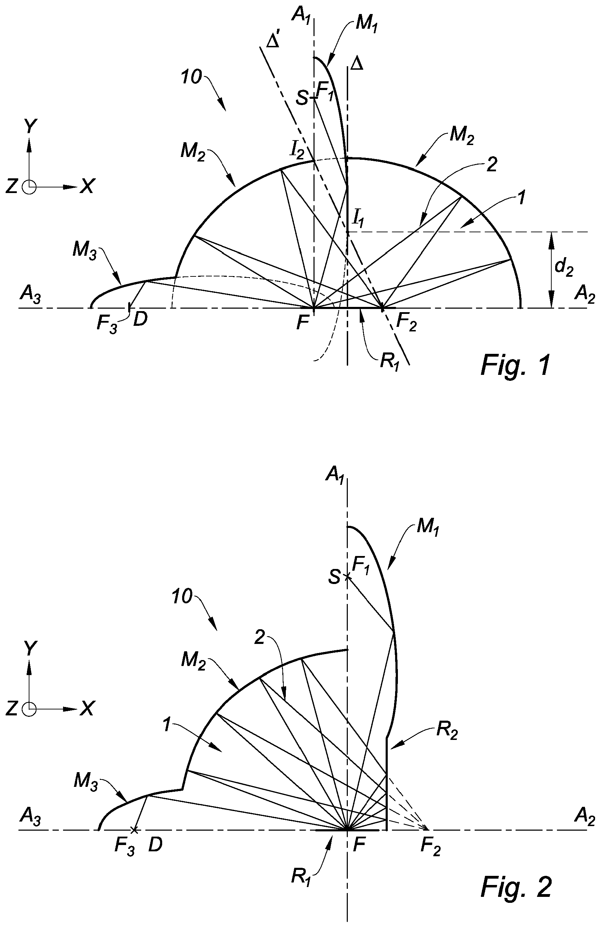

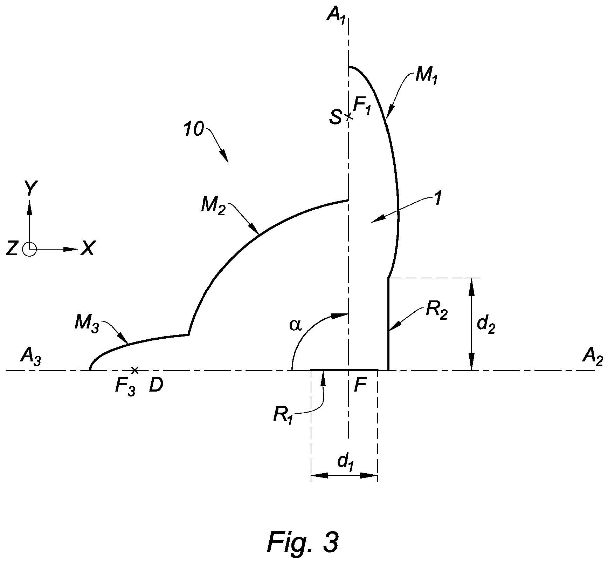

A$_2$ et A$_3$ sont avantageusement confondus. Autrement dit, les plans dans lesquels s'étendent les foyers des deuxième et troisième miroirs elliptiques M$_2$, M$_3$ sont avantageusement confondus. En d'autres termes, les foyers des deuxième et troisième miroirs elliptiques M$_2$, M$_3$ sont avantageusement coplanaires. Comme illustré aux figures 1 à 3, les foyers F, F$_2$ du deuxième miroir elliptique M$_2$ et les foyers F, F$_3$ du troisième miroir elliptique M$_3$ s'étendent avantageusement dans le plan (X, Z).

La demi-droite FA$_3$, destinée à être orientée vers le détecteur D, et la demi-droite FA$_1$, destinée à être orientée vers la source lumineuse S, forment avantageusement un angle, noté $\alpha$, compris entre 45° et 120°. Autrement dit, les plans dans lesquels s'étendent les foyers des troisième et premier miroirs elliptiques M$_3$, M$_1$ forment un angle dièdre $\alpha$, compris entre 45° et 120°. L'angle $\alpha$ est avantageusement compris entre 45° et 90°, préférentiellement égal à 90°. Comme illustré aux figures 1 à 3, le plan (X, Z) dans lequel s'étendent les foyers F, F$_3$ du troisième miroir elliptique M$_3$ forme préférentiellement un angle dièdre égal à 90° avec le plan (Y, Z) dans lequel sont les foyers F, F$_1$ du premier miroir elliptique M$_1$.

Dans le mode de réalisation illustré à la figure 1, le deuxième miroir elliptique M$_2$ comporte des première et seconde parties agencées de part et d'autre du premier miroir elliptique M$_1$. En d'autres termes, le premier miroir elliptique M$_1$ est intercalé entre les première et seconde parties du deuxième miroir elliptique M$_2$. Comme visible à la figure 1, l'ellipse définie par le deuxième miroir elliptique M$_2$ présente un axe de symétrie $\Delta$ s'étendant suivant la direction Y. Les première et seconde parties du deuxième miroir elliptique M$_2$ s'étendent suivant la direction X de part et d'autre de l'axe de symétrie $\Delta$. La première partie du deuxième miroir elliptique M$_2$ est préférentiellement en contact avec le troisième miroir elliptique M$_3$. La seconde partie du deuxième miroir elliptique M$_2$ est préférentiellement en contact avec le premier miroir elliptique M$_1$. Le premier miroir elliptique M$_1$ est agencé relativement au deuxième miroir elliptique M$_2$ pour ne pas réfléchir le rayonnement lumineux 2 sortant de la première partie du deuxième miroir elliptique M$_2$. Pour ce faire, comme illustré à la figure 1, considérons :

- I$_2$ l'extrémité de la première partie du deuxième miroir elliptique M$_2$ située en regard du premier miroir elliptique M$_1$, située sur le premier axe focal A$_1$,
- $\Delta$' l'axe passant par I$_2$ et F$_2$,
- I$_1$ l'extrémité du premier miroir elliptique M$_1$ située en regard du premier réflecteur R$_1$,
- d$_2$ la distance entre I$_1$ et le deuxième axe focal A$_2$.

Le premier miroir elliptique M$_1$ est avantageusement agencé relativement au deuxième miroir elliptique M$_2$ de sorte que I$_1$ appartienne à $\Delta$', avec d$_2$ vérifiant la relation $d_2 = \dfrac{b^2}{2a}$, où a est le demi-grand axe du deuxième miroir elliptique M$_2$ et b est le demi-petit axe du deuxième miroir elliptique M$_2$. Ainsi, le premier miroir elliptique M$_1$ peut collecter un maximum de rayons lumineux issus de la source lumineuse S (lorsque la source lumineuse S n'est pas directive), et ce sans réfléchir le rayonnement lumineux 2 sortant de la première partie du deuxième miroir elliptique M$_2$. Le premier miroir elliptique M$_1$ peut être agencé relativement au deuxième miroir elliptique M$_2$ de sorte que $d_2 > \dfrac{b^2}{2a}$, avec comme

inconvénient une perte du nombre de rayons lumineux reçus par le premier miroir elliptique $M_1$ lorsque la source lumineuse S n'est pas directive (e.g. isotrope) telle qu'une source thermique. Cet inconvénient peut être surmonté en utilisant une source lumineuse S directive telle qu'un laser à cascade quantique.

Dans le mode de réalisation illustré à la figure 2, la seconde partie du deuxième miroir elliptique $M_2$ est supprimée.

A titre d'exemple non limitatif, les dimensions (a, b) des ellipses des premier, deuxième et troisième miroirs elliptiques $M_1$, $M_2$, $M_3$ sont rassemblées dans le tableau ci-après :

| Dimension<br>Miroir | a ($\mu$m) | b ($\mu$m) |
|---|---|---|
| Premier miroir elliptique $M_1$ | 79,6 | 48 |
| Deuxième miroir elliptique $M_2$ | 100 | 90 |
| Troisième miroir elliptique $M_3$ | 45 | 15 |

où « a » est le demi-grand axe, « b » est le demi-petit axe. La dimension « c » des ellipses, qui est la distance entre le centre et un foyer de l'ellipse correspondante, peut être calculée par la formule suivante : $c = \sqrt{a^2 - b^2}$.

Les dimensions (a, b, c) des ellipses des premier, deuxième et troisième miroirs elliptiques $M_1$, $M_2$, $M_3$ sont choisies notamment en fonction de la longueur d'interaction l désirée entre le fluide et le rayonnement lumineux 2 lorsque l'application envisagée est un capteur de fluide.

Chaque miroir elliptique $M_1$, $M_2$, $M_3$ possède avantageusement un coefficient de réflexion du rayonnement lumineux 2 supérieur ou égal à 75% pour tout angle d'incidence. Ledit coefficient de réflexion est avantageusement supérieur ou égal à 80%, préférentiellement supérieur ou égal à 85%, plus préférentiellement supérieur ou égal à 90%, pour tout angle d'incidence. Avantageusement, le coefficient de réflexion du rayonnement lumineux 2 est supérieur ou égal à 95%, de préférence supérieur ou égal à 98% pour tout angle d'incidence inférieur à 45°. Par « coefficient de réflexion », on entend le coefficient de réflexion en intensité, pour un angle d'incidence compris entre 0° (incidence normale) et 90° (incidence rasante), pour une longueur d'onde donnée, et tenant compte des polarisations « s » et « p » moyennées arithmétiquement lorsque la source lumineuse S est une source thermique. L'angle d'incidence est l'angle entre la direction de propagation du rayonnement lumineux 2 et la normale à la surface réfléchissante du miroir elliptique correspondant.

Le deuxième miroir elliptique $M_2$ possède avantageusement une ellipticité $\varepsilon$ vérifiant $0 < \varepsilon < 0{,}25$.

La cavité optique 1 est avantageusement dépourvue de lentilles.

**Premier réflecteur**

Le premier réflecteur $R_1$ est avantageusement un miroir plan. Le premier réflecteur $R_1$ s'étend préférentiellement suivant $A_2$, et présente une dimension, notée $d_1$, selon $A_2$ vérifiant :

$$d_1 \geq 2c$$

où c est la distance entre le centre du deuxième miroir elliptique et le foyer commun F.

Dans le mode de réalisation illustré à la figure 1, le premier réflecteur $R_1$ est agencé pour réfléchir le rayonnement lumineux 2 sortant directement du deuxième miroir elliptique $M_2$ vers le troisième miroir elliptique $M_3$.

Plus précisément, le premier réflecteur $R_1$ est agencé pour renvoyer le rayonnement lumineux 2 sortant directement du deuxième miroir elliptique $M_2$ vers le deuxième miroir elliptique $M_2$ jusqu'à ce que le rayonnement lumineux 2 atteigne le troisième miroir elliptique $M_3$. Les réflexions successives du rayonnement lumineux 2 au sein du deuxième miroir elliptique $M_2$ par l'intermédiaire du premier réflecteur $R_1$ peuvent être qualifiées de réflexions pendulaires. En d'autres termes, les rayons lumineux réfléchis successivement par le deuxième miroir elliptique $M_2$ et par le premier réflecteur $R_1$ se déplacent entre une extrémité et l'extrémité opposée du deuxième miroir elliptique $M_2$, tout en s'aplatissant.

**Deuxième réflecteur**

Dans le mode de réalisation illustré à la figure 2, la cavité optique 1 comporte avantageusement un deuxième réflecteur $R_2$ agencé pour réfléchir le rayonnement lumineux 2 sortant du deuxième miroir elliptique $M_2$ vers le premier réflecteur $R_1$. Le premier réflecteur $R_1$ est alors agencé pour réfléchir le rayonnement lumineux 2 sortant du deuxième réflecteur $R_2$ vers le troisième miroir elliptique $M_3$. Le premier réflecteur $R_1$ est agencé pour réfléchir le rayonnement lumineux 2 sortant indirectement (i.e. après réflexion avec le deuxième réflecteur $R_2$) du deuxième miroir elliptique $M_2$ vers le troisième miroir elliptique $M_3$. Plus précisément, le premier réflecteur $R_1$ est agencé pour renvoyer le rayonnement lumineux 2 sortant indirectement du deuxième miroir elliptique $M_2$ vers le deuxième miroir elliptique $M_2$ jusqu'à ce que le rayonnement lumineux 2 atteigne le troisième miroir elliptique $M_3$. Les réflexions successives du rayonnement lumineux 2 au sein du deuxième miroir elliptique $M_2$ par l'intermédiaire du premier réflecteur $R_1$ et du deuxième réflecteur $R_2$ peuvent être qualifiées de réflexions pendulaires. En d'autres termes, les rayons lumineux réfléchis successivement par le deuxième miroir elliptique $M_2$ et par les premiers et deuxième réflecteurs $R_1$, $R_2$ se déplacent entre une extrémité et l'extrémité opposée du deuxième miroir elliptique $M_2$, tout en s'aplatissant.

Comme dit précédemment, dans le mode de réalisation illustré à la figure 2, la seconde partie du deuxième miroir elliptique $M_2$ est supprimée et est remplacée par le deuxième réflecteur $R_2$.

Le deuxième réflecteur $R_2$ est avantageusement un miroir plan. Le deuxième réflecteur $R_2$ s'étend préférentiellement dans le prolongement du premier miroir elliptique $M_1$ suivant une direction longitudinale parallèle à $A_1$, et présente une dimension, notée $d_2$, selon la direction longitudinale et à partir du deuxième axe focal $A_2$ vérifiant :

$$d_2 \geq \frac{b^2}{2a}$$

où :

- a est le demi-grand axe du deuxième miroir elliptique $M_2$,
- b est le demi-petit axe du deuxième miroir elliptique $M_2$.

La dimension $d_2$ correspond à la distance $d_2$ entre $I_1$ et le deuxième axe focal $A_2$ dans le premier mode de réalisation illustré à la figure 1.

Le deuxième réflecteur $R_2$ est avantageusement agencé de sorte que $d_2$ vérifie la relation $d_2 = \frac{b^2}{2a}$, où a est le demi-grand axe du deuxième miroir elliptique $M_2$ et b est le demi-petit axe du deuxième miroir elliptique $M_2$. Ainsi, le premier miroir elliptique $M_1$ peut collecter un maximum de rayons lumineux issus de la source lumineuse S (lorsque la source lumineuse n'est pas directive), et ce sans réfléchir le rayonnement lumineux 2 sortant du deuxième miroir elliptique $M_2$.

Le deuxième réflecteur $R_2$ peut être agencé de sorte que $d_2 > \frac{b^2}{2a}$, avec comme inconvénient une perte du nombre de rayons lumineux reçus par le premier miroir elliptique $M_1$ lorsque la source lumineuse S n'est pas directive (e.g. isotrope) telle qu'une source thermique. Cet inconvénient peut être surmonté en utilisant une source lumineuse S directive telle qu'un laser à cascade quantique.

**Guide d'onde**

La cavité optique 1 comporte avantageusement deux extrémités réfléchissantes opposées (non visibles sur les figures), adaptées pour réfléchir le rayonnement lumineux 2, et agencées de part et d'autre des premier, deuxième et troisième miroirs elliptiques $M_1$, $M_2$, $M_3$ ainsi que du premier réflecteur $R_1$ de manière à former un guide d'onde. Lorsque la cavité optique 1 comporte un deuxième réflecteur $R_2$, les deux extrémités réfléchissantes sont agencées de part et d'autre des premier, deuxième et troisième miroirs elliptiques $M_1$, $M_2$, $M_3$ du premier réflecteur $R_1$ ainsi que du deuxième réflecteur $R_2$ de manière à former un guide d'onde. Les deux extrémités réfléchissantes guident le rayonnement lumineux 2 suivant la direction Z de l'épaisseur de la cavité optique 1. Les premier, deuxième et troisième miroirs elliptiques $M_1$, $M_2$, $M_3$, le premier réflecteur $R_1$, et le cas échéant le deuxième réflecteur $R_2$, relient les deux extrémités réfléchissantes.

Chaque extrémité réfléchissante comporte une surface réfléchissante possédant un coefficient de réflexion du rayonnement lumineux 2 supérieur ou égal à 80%, de préférence supérieur ou égal à 85%, plus préférentiellement supérieur ou égal à 90%, pour tout angle d'incidence. Avantageusement, le coefficient de réflexion du rayonnement lumineux 2 est supérieur ou égal à 95%, de préférence supérieur ou égal à 98% pour tout angle d'incidence inférieur à 45°. Par « coefficient de réflexion », on entend le coefficient de réflexion en intensité, pour un angle d'incidence compris entre 0° (incidence normale) et 90° (incidence rasante), pour une longueur d'onde donnée, et tenant compte des polarisations « s » et « p » moyennées arithmétiquement lorsque la source lumineuse S est une source thermique. L'angle d'incidence est l'angle entre la direction de propagation du rayonnement lumineux 2 et la normale à la surface réfléchissante de l'extrémité réfléchissante correspondante. La surface réfléchissante de chaque extrémité réfléchissante est préférentiellement plane. Les surfaces réfléchissantes, planes, des extrémités réfléchissantes sont avantageusement parallèles.

La surface réfléchissante de chaque extrémité réfléchissante est préférentiellement réalisée dans un matériau métallique. Le matériau métallique est préférentiellement sélectionné dans le groupe comportant l'or, l'argent, l'aluminium et le cuivre. La surface réfléchissante de chaque extrémité réfléchissante est avantageusement revêtue d'une couche de protection contre une corrosion du matériau métallique. La couche de protection est avantageusement réalisée dans un matériau sélectionné dans le groupe comportant $SiO_2$, $SiN$, $Si_3N_4$, un carbone amorphe DLC (pour l'acronyme *Diamond-like carbon* en langue anglaise), le polytétrafluoroéthylène (PTFE), Pt, TiN.

Les deux extrémités réfléchissantes sont préférentiellement réalisées chacune sous la forme d'une plaque. Les plaques sont avantageusement munies d'ouvertures conformées pour recevoir la source lumineuse S et le détecteur D lorsque les plaques sont mises en contact et fixées entre elles. Les deux extrémités réfléchissantes forment avantageusement des miroirs plans.

## Fabrication de la cavité optique

Un premier procédé de fabrication d'une cavité optique 1 selon l'invention, comporte les étapes :

a) prévoir des premier et second substrats d'un matériau, le matériau étant de préférence semi-conducteur, plus préférentiellement le silicium ;
b) évider chacun des premier et second substrats de manière à former un fond et à conserver une partie superficielle ;
c) assembler les premier et second substrats de sorte que :

- les parties superficielles conservées lors de l'étape b) forment les premier, deuxième et troisième miroirs elliptiques $M_1$, $M_2$, $M_3$, le premier réflecteur $R_1$, et le cas échéant le deuxième réflecteur $R_2$,
- les fonds forment les extrémités réfléchissantes opposées de la cavité optique 1.

L'étape b) est avantageusement exécutée par une gravure ionique réactive profonde. L'étape b) comporte préférentiellement une étape préalable consistant à déposer une résine photosensible à la surface des premier et second substrats. Puis les évidements peuvent être obtenus par des étapes de photolithographie et de gravure. L'étape b) est avantageusement exécutée de sorte que les évidements obtenus permettent de former des fonds plans. Le fait d'évider deux substrats, au lieu d'un seul, lors de l'étape b) permet d'augmenter l'épaisseur de la cavité optique 1 formée lors de l'étape c) afin de réduire les pertes optiques par réflexion.

La surface réfléchissante des extrémités réfléchissantes est avantageusement formée par un dépôt d'un matériau métallique sur les fonds des premier et second substrats, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape c).

Les surfaces réfléchissantes des miroirs elliptiques $M_1$, $M_2$, $M_3$ et des réflecteurs $R_1$, $R_2$ sont avantageusement formées par un dépôt d'un matériau métallique sur un bord latéral d'une partie superficielle, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape c).

Ainsi, les évidements des premier et second substrats obtenus lors de l'étape b) permettent d'obtenir deux demi-cavités. La cavité optique 1 est formée lors de l'étape c) en assemblant les premier et second substrats afin de réunir les deux demi-cavités. Le fait de former un évidement, par exemple par une gravure ionique réactive, dans un substrat d'un matériau semi-conducteur est une solution peu coûteuse et viable car l'inclinaison obtenue des parties superficielles relativement à la normale aux premier et second substrats est typiquement de l'ordre de 1° à 2°.

Un deuxième procédé de fabrication d'une cavité optique 1 selon l'invention, comporte les étapes :

a) prévoir des premier et second moules comportant respectivement une empreinte de première et seconde pièces comportant chacune une embase surmontée d'une partie superficielle ;
b) injecter un matériau plastique dans les premier et second moules de manière à obtenir les première et seconde pièces ;

c) assembler les première et seconde pièces de sorte que :

- les parties superficielles forment les premier, deuxième et troisième miroirs elliptiques $M_1$, $M_2$, $M_3$, le premier réflecteur $R_1$, et le cas échéant le deuxième réflecteur $R_2$,
- les embases forment les extrémités réfléchissantes opposées de la cavité optique 1.

L'étape a) est de préférence exécutée de sorte que les premier et second moules comportent chacun une partie fixe et une partie mobile. L'étape b) est de préférence exécutée avec une presse à injecter.

La surface réfléchissante des extrémités réfléchissantes est avantageusement formée par un dépôt d'un matériau métallique sur les embases des premier et second substrats, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape c).

Les surfaces réfléchissantes des miroirs elliptiques $M_1$, $M_2$, $M_3$ et des réflecteurs $R_1$, $R_2$ sont avantageusement formées par un dépôt d'un matériau métallique sur un bord latéral d'une partie superficielle, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape c).

Ainsi, la cavité optique 1 est formée lors de l'étape c) en assemblant les première et seconde pièces afin de réunir deux demi-cavités délimitées chacune par l'embase et la partie superficielle correspondante. L'injection plastique est une solution peu coûteuse et viable dans la mesure où les défauts de forme ne sont pas préjudiciables pour imager correctement la source lumineuse S sur le détecteur D.

## Capteur

Un objet de l'invention est un capteur 10 spectroscopique, comportant :

- une cavité optique 1 conforme à l'invention ; le premier miroir elliptique $M_1$ présentant un foyer, noté $F_1$, distinct du foyer commun F ; le troisième miroir elliptique $M_3$ présentant un foyer, noté $F_3$, distinct du foyer commun F ;
- une source lumineuse S, adaptée pour émettre un rayonnement lumineux 2, et agencée au foyer $F_1$ ;
- un détecteur D, agencé au foyer $F_3$ pour recevoir le rayonnement lumineux 2 sortant du troisième miroir elliptique $M_3$.

Le capteur 10 spectroscopique peut être un capteur infrarouge (e.g. non-dispersif) pour détecter un fluide tel qu'un gaz. A titre d'exemples non limitatifs, le gaz peut être sélectionné dans le groupe comportant le monoxyde de carbone, le dioxyde de carbone, au moins un hydrocarbure, un hydrochlorofluorocarbure, un chlorofluorocarbure, le monoxyde d'azote, le dioxyde d'azote, le dioxyde de soufre, l'ozone. Le gaz peut également être sélectionné parmi les gaz suivants, absorbant dans une bande spectrale d'absorption comprise entre 0,78 $\mu$m et 12 $\mu$m :

- HF, HCl, $SO_3$ HBr, $H_2S$, COS, $C_2H_6$, $C_3H_8$, $C_4H_{10}$,
- $COCl_2$, $BF_3$, $CH_4$, $HNO_3$, un composé organique volatil (e.g. $C_6H_6$, $CH_3COCH_3$), $B_2H_6$, CO, $CS_2$, HCN, $WF_6$, $N_2O$, $NH_3$,
- $AsH_3$, un hydrocarbure aromatique polycyclique, le benzène, le toluène, les trois isomères du xylène, $C_2H_4O$, $BCl_3$.

Le capteur 10 spectroscopique peut être également un capteur de particules, ou un capteur biologique.

Dans le cas d'un capteur de particules, la source lumineuse S émet préférentiellement dans le visible. La source lumineuse S peut être de type LED. Le principe de fonctionnement est le suivant. Les particules génèrent des ondes diffusées dans la cavité optique 1 à des angles aléatoires, qui ne seront pas refocalisées jusqu'au détecteur D en raison d'absorptions successives notamment par les miroirs elliptiques $M_1$, $M_2$, $M_3$. Cette perte de transmission mesurée par le détecteur D est révélatrice du type (indice, taille) et de la concentration des particules dans la mesure où les particules ne sont généralement pas intrinsèquement absorbantes.

## Source lumineuse

A titre d'exemples non limitatifs, la source lumineuse S peut être une source thermique ou un laser à cascade quantique. La source lumineuse S peut être une source infrarouge. La source lumineuse S comporte avantageusement un élément, par exemple de type filament, dans lequel on fait circuler un courant électrique de sorte que l'élément s'échauffe et émet un rayonnement infrarouge. L'élément présente une dimension, notée e, suivant l'épaisseur de la cavité optique 1 vérifiant préférentiellement :
100 $\mu m \leq e \leq E \leq 1,5\ mm$, plus préférentiellement 250 $\mu m \leq e \leq E \leq 1200\ \mu m$ où E est l'épaisseur de la cavité optique 1.

L'élément présente préférentiellement la forme d'un disque présentant une surface circulaire, avec un diamètre

de 250 $\mu$m (correspondant à la dimension e). On définit l'axe de la source lumineuse S comme la normale à la surface circulaire. A titre d'exemple non limitatif, le disque peut présenter une épaisseur de 400 nm suivant l'axe de la source lumineuse S. L'image de la source lumineuse S (i.e. l'élément en forme de disque) est un rectangle présentant une largeur de 250 $\mu$m et une hauteur de 600 $\mu$m (la hauteur correspondant à la direction Z suivant l'épaisseur de la cavité optique 1).

**Détecteur**

Le détecteur D peut être un détecteur infrarouge. Le détecteur infrarouge peut être par exemple un bolomètre ou un pyromètre. Le détecteur infrarouge peut présenter une surface sensible à l'infrarouge. A titre d'exemple non limitatif, la surface sensible peut avoir la forme d'un carré de 600 $\mu$m de côté. Le détecteur D est équipé préférentiellement d'un filtre optique de type passe-bande, centré sur la bande spectrale d'absorption du gaz à détecter le cas échéant, lorsque la source lumineuse S est une source thermique. Le détecteur D s'étend avantageusement selon Z, sur toute l'épaisseur de la cavité optique 1, afin de recevoir un maximum de rayonnement lumineux, la conjugaison des foyers des miroirs elliptiques $M_1$, $M_2$, $M_3$ étant imparfaite selon Z.

**Revendications**

1.  Cavité optique (1), comportant :

    - un premier miroir elliptique ($M_1$), possédant un premier axe focal, noté $A_1$, et destiné à réfléchir un rayonnement lumineux (2) émis par une source lumineuse (S) ;
    - un deuxième miroir elliptique ($M_2$), possédant un deuxième axe focal, noté $A_2$ ;
    - un troisième miroir elliptique ($M_3$), possédant un troisième axe focal, noté $A_3$, le rayonnement lumineux (2) sortant du troisième miroir elliptique ($M_3$) étant destiné à être reçu par un détecteur (D) ;
    - un premier réflecteur ($R_1$), agencé pour réfléchir le rayonnement lumineux (2) sortant du premier miroir elliptique ($M_1$) vers le deuxième miroir elliptique ($M_2$), et agencé pour réfléchir le rayonnement lumineux (2) sortant du deuxième miroir elliptique ($M_2$) vers le troisième miroir elliptique ($M_3$) ;

    les premier, deuxième et troisième miroirs elliptiques ($M_1$, $M_2$, $M_3$) étant agencés de sorte que $A_1$, $A_2$ et $A_3$ possèdent un point d'intersection, noté F, correspondant à un foyer commun aux premier, deuxième et troisième miroirs elliptiques ($M_1$, $M_2$, $M_3$).

2.  Cavité optique (1) selon la revendication 1, dans laquelle $A_2$ et $A_3$ sont confondus.

3.  Cavité optique (1) selon la revendication 1 ou 2, dans laquelle la demi-droite $FA_3$, destinée à être orientée vers le détecteur (D), et la demi-droite $FA_1$, destinée à être orientée vers la source lumineuse (S), forment un angle, noté $\alpha$, compris entre 45° et 120°.

4.  Cavité optique (1) selon la revendication 3, dans laquelle l'angle $\alpha$ est compris entre 45° et 90°, de préférence égal à 90°.

5.  Cavité optique (1) selon l'une des revendications 1 à 4, comportant un deuxième réflecteur ($R_2$) agencé pour réfléchir le rayonnement lumineux (2) sortant du deuxième miroir elliptique ($M_2$) vers le premier réflecteur ($R_1$) ; le premier réflecteur ($R_1$) étant agencé pour réfléchir le rayonnement lumineux (2) sortant du deuxième réflecteur ($R_2$) vers le troisième miroir elliptique ($M_3$).

6.  Cavité optique (1) selon la revendication 5, dans laquelle le deuxième réflecteur ($R_2$) est un miroir plan.

7.  Cavité optique (1) selon la revendication 5 ou 6, dans laquelle le deuxième réflecteur ($R_2$) s'étend dans le prolongement du premier miroir elliptique ($M_1$), suivant une direction longitudinale parallèle à $A_1$, et présente une dimension, notée $d_2$, selon la direction longitudinale et à partir du deuxième axe focal ($A_2$) vérifiant :

$$d_2 \geq \frac{b^2}{2a}$$

où :

- a est le demi-grand axe du deuxième miroir elliptique ($M_2$),
- b est le demi-petit axe du deuxième miroir elliptique ($M_2$).

**8.** Cavité optique (1) selon l'une des revendications 1 à 7, dans laquelle le premier réflecteur ($R_1$) est un miroir plan.

**9.** Cavité optique (1) selon l'une des revendications 1 à 8, dans laquelle le premier réflecteur ($R_1$) s'étend suivant $A_2$, et présente une dimension, notée $d_1$, selon $A_2$ vérifiant :

$$d_1 \geq 2c$$

où c est la distance entre le centre du deuxième miroir elliptique ($M_2$) et le foyer commun F.

**10.** Cavité optique (1) selon l'une des revendications 1 à 9, dans laquelle le deuxième miroir elliptique ($M_2$) possède une ellipticité $\varepsilon$ vérifiant $0<\varepsilon<0,25$.

**11.** Cavité optique (1) selon l'une des revendications 1 à 10, comportant deux extrémités réfléchissantes opposées, adaptées pour réfléchir le rayonnement lumineux (2), et agencées de part et d'autre des premier, deuxième et troisième miroirs elliptiques ($M_1$, $M_2$, $M_3$) ainsi que du premier réflecteur ($R_1$) de manière à former un guide d'onde.

**12.** Capteur (10) spectroscopique, comportant :

- une cavité optique (1) selon l'une des revendications 1 à 11 ; le premier miroir elliptique ($M_1$) présentant un foyer, noté $F_1$, distinct du foyer commun F ; le troisième miroir elliptique ($M_3$) présentant un foyer, noté $F_3$, distinct du foyer commun F ;
- une source lumineuse (S), adaptée pour émettre un rayonnement lumineux (2), et agencée au foyer $F_1$ ;
- un détecteur (D), agencé au foyer $F_3$ pour recevoir le rayonnement lumineux (2) sortant du troisième miroir elliptique ($M_3$).


**Patentansprüche**

**1.** Optischer Hohlraum (1), umfassend:

- einen ersten elliptischen Spiegel ($M_1$), der eine erste Brennachse aufweist, die mit $A_1$ bezeichnet ist, und die dazu bestimmt ist, eine Lichtstrahlung (2) zu reflektieren, welche von einer Lichtquelle (S) emittiert wird;
- einen zweiten elliptischen Spiegel ($M_2$), der eine zweite Brennachse aufweist, die mit $A_2$ bezeichnet ist;
- einen dritten elliptischen Spiegel ($M_3$), der eine dritte Brennachse aufweist, die mit $A_3$ bezeichnet ist, wobei die Lichtstrahlung (2), die aus dem dritten elliptischen Spiegel ($M_3$) austritt, dazu bestimmt ist, von einem Detektor (D) empfangen zu werden;
- einen ersten Reflektor ($R_1$), der eingerichtet ist, um die Lichtstrahlung (2), die aus dem ersten elliptischen Spiegel ($M_1$) austritt, zu dem zweiten elliptischen Spiegel ($M_2$) zu reflektieren, und der eingerichtet ist, um die Lichtstrahlung (2), die aus dem zweiten elliptischen Spiegel ($M_2$) austritt, zu dem dritten elliptischen Spiegel ($M_3$) zu reflektieren;

wobei der erste, zweite und dritte elliptische Spiegel ($M_1$, $M_2$, $M_3$) derart eingerichtet sind, dass $A_1$, $A_2$ und $A_3$ einen Schnittpunkt aufweisen, der mit F bezeichnet ist, und der einem Brennpunkt entspricht, den der erste, zweite und dritte elliptische Spiegel ($M_1$, $M_2$, $M_3$) gemeinsam haben.

**2.** Optischer Hohlraum (1) nach Anspruch 1, wobei $A_2$ und $A_3$ zusammenfallen.

**3.** Optischer Hohlraum (1) nach Anspruch 1 oder 2, wobei die Halbgerade $FA_3$, die dazu bestimmt ist, zu dem Detektor (D) orientiert zu sein, und die Halbgerade $FA_1$, die dazu bestimmt ist, zu der Lichtquelle (S) orientiert zu sein, einen Winkel, der mit $\alpha$ bezeichnet ist, zwischen 45° und 120° bilden.

**4.** Optischer Hohlraum (1) nach Anspruch 3, wobei der Winkel $\alpha$ zwischen 45° und 90°, vorzugsweise gleich 90° ist.

**5.** Optischer Hohlraum (1) nach einem der Ansprüche 1 bis 4, umfassend einen zweiten Reflektor ($R_2$), der eingerichtet ist, um die Lichtstrahlung (2), die aus dem zweiten elliptischen Spiegel ($M_2$) austritt, zu dem ersten Reflektor ($R_1$) zu reflektieren; wobei der erste Reflektor ($R_1$) eingerichtet ist, um die Lichtstrahlung (2), die aus dem zweiten Reflektor ($R_2$) austritt, zu dem dritten elliptischen Spiegel ($M_3$) zu reflektieren.

**6.** Optischer Hohlraum (1) nach Anspruch 5, wobei der zweite Reflektor ($R_2$) ein planarer Spiegel ist.

**7.** Optischer Hohlraum (1) nach Anspruch 5 oder 6, wobei sich der zweite Reflektor ($R_2$) in der Verlängerung des ersten elliptischen Spiegels ($M_1$) in einer Längsrichtung parallel zu $A_1$ erstreckt und eine Abmessung, die mit $d_2$ bezeichnet ist, in der Längsrichtung und von der zweiten Brennachse ($A_2$) aufweist, und die entspricht:

$$d_2 \geq \frac{b^2}{2\alpha}$$

wobei:

- a die große Halbachse des zweiten elliptischen Spiegels ($M_2$) ist,
- b die kleine Halbachse des zweiten elliptischen Spiegels ($M_2$) ist.

**8.** Optischer Hohlraum (1) nach einem der Ansprüche 1 bis 7, wobei der erste Reflektor ($R_1$) ein planarer Spiegel ist.

**9.** Optischer Hohlraum (1) nach einem der Ansprüche 1 bis 8, wobei sich der erste Reflektor ($R_1$) gemäß $A_2$ erstreckt und eine Abmessung, die als $d_1$ bezeichnet ist, gemäß $A_2$ aufweist, und die entspricht:

$$d_1 \geq 2c$$

wobei c die Distanz zwischen dem Mittelpunkt des zweiten elliptischen Spiegels ($M_2$) und dem gemeinsamen Brennpunkt F ist.

**10.** Optischer Hohlraum (1) nach einem der Ansprüche 1 bis 9, wobei der zweite elliptische Spiegel ($M_2$) eine Elliptizität $\varepsilon$ aufweist, die entspricht: $0 < \varepsilon < 0{,}25$.

**11.** Optischer Hohlraum (1) nach einem der Ansprüche 1 bis 10, umfassend zwei gegenüberliegende reflektierende Enden, die dafür geeignet sind, um die Lichtstrahlung (2) zu reflektieren, und die auf beiden Seiten des ersten, zweiten und dritten elliptischen Spiegels ($M_1$, $M_2$, $M_3$) sowie des ersten Reflektors ($R_1$) eingerichtet sind, um einen Wellenleiter zu bilden.

**12.** Spektroskopischer Sensor (10), umfassend:

- einen optischen Hohlraum (1) nach einem der Ansprüche 1 bis 11; wobei der erste elliptische Spiegel ($M_1$) einen Brennpunkt aufweist, der mit $F_1$ bezeichnet ist, und der von dem gemeinsamen Brennpunkt F verschieden ist; wobei der dritte elliptische Spiegel ($M_3$) einen Brennpunkt aufweist, der mit $F_3$ bezeichnet ist, und der von dem gemeinsamen Brennpunkt F verschieden ist;
- eine Lichtquelle (S), die dafür geeignet ist, um eine Lichtstrahlung (2) zu emittieren, und die im Brennpunkt $F_1$ eingerichtet ist;
- einen Detektor (D), der im Brennpunkt $F_3$ eingerichtet ist, um die Lichtstrahlung (2) zu empfangen, die aus dem dritten elliptischen Spiegel ($M_3$) austritt.

**Claims**

**1.** Optical cavity (1), comprising:

- a first elliptical mirror ($M_1$), having a first focal axis noted $A_1$, and designed to reflect a light beam (2) emitted by a light source (S);
- a second elliptical mirror ($M_2$), having a second focal axis noted $A_2$;

- a third elliptical mirror ($M_3$), having a third focal axis noted $A_3$, the light beam (2) exiting from the third elliptical mirror ($M_3$) being designed to be received by a detector (D);
- a first reflector ($R_1$), arranged to reflect the light beam (2) exiting from the first elliptical mirror ($M_1$) in the direction of the second elliptical mirror ($M_2$), and arranged to reflect the light beam (2) exiting from the second elliptical mirror ($M_2$) in the direction of the third elliptical mirror ($M_3$);

the first, second and third elliptical mirrors ($M_1$, $M_2$, $M_3$) being arranged so that $A_1$, $A_2$ and $A_3$ have a point of intersection, noted F, corresponding to a focus common to the first, second and third elliptical mirrors ($M_1$, $M_2$, $M_3$).

2. Optical cavity (1) according to claim 1, wherein $A_2$ and $A_3$ are identical.

3. Optical cavity (1) according to claim 1 or 2, wherein the half-line $FA_3$ designed to be directed towards the detector (D) and the half-line $FA_1$ designed to be directed towards the light source (S) form an angle, noted $\alpha$, comprised between 45° and 120°.

4. Optical cavity (1) according to claim 3, wherein angle $\alpha$ is comprised between 45° and 90°, preferably equal to 90°.

5. Optical cavity (1) according to one of claims 1 to 4, comprising a second reflector ($R_2$) arranged to reflect the light beam (2) exiting from the second elliptical mirror ($M_2$) in the direction of the first reflector ($R_1$); the first reflector ($R_1$) being arranged to reflect the light beam (2) exiting from the second reflector ($R_2$) in the direction of the third elliptical mirror ($M_3$).

6. Optical cavity (1) according to claim 5, wherein the second reflector ($R_2$) is a plane mirror.

7. Optical cavity (1) according to claim 5 or 6, wherein the second reflector ($R_2$) extends in the continuation of the first elliptical mirror ($M_1$), in a longitudinal direction parallel to $A_1$, and presents a dimension, noted $d_2$, in the longitudinal direction and starting from second focal axis ($A_2$) verifying:

$$d_2 \geq \frac{b^2}{2a}$$

where:

- a is the semi-major axis of the second elliptical mirror ($M_2$),
- b is the semi-minor axis of the second elliptical mirror ($M_2$).

8. Optical cavity (1) according to one of claims 1 to 7, wherein the first reflector ($R_1$) is a plane mirror.

9. Optical cavity (1) according to one of claims 1 to 8, wherein the first reflector ($R_1$) extends along $A_2$ and presents a dimension, noted $d_1$, along $A_2$ verifying:

$$d_1 \geq 2c$$

where c is the distance between the centre of the second elliptical mirror ($M_2$) and the common focus F.

10. Optical cavity (1) according to one of claims 1 to 9, wherein the second elliptical mirror ($M_2$) has an ellipticity $\varepsilon$ verifying $0<\varepsilon<0.25$.

11. Optical cavity (1) according to one of claims 1 to 10, comprising two opposite reflecting ends designed to reflect the light beam (2) and arranged on each side of the first, second and third elliptical mirrors ($M_1$, $M_2$, $M_3$) and of the first reflector ($R_1$) so as to form a waveguide.

12. Spectroscopic sensor (10) comprising:

- an optical cavity (1) according to one of claims 1 to 11, the first elliptical mirror ($M_1$) presenting a focus, noted $F_1$, different from the common focus F, the third elliptical mirror ($M_3$) presenting a focus, noted $F_3$, different from

the common focus F;
- a light source (S), designed to emit a light beam (2) and arranged at the focus $F_1$;
- a detector (D), arranged at focus $F_3$ to receive the light beam (2) exiting from the third elliptical mirror ($M_3$).

*Fig. 1*

*Fig. 2*

*Fig. 3*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3016214